# EUROPEAN PATENT SPECIFICATION

(11) **EP 0 541 065 B1**
(45) Date of publication and mention of the grant of the patent: **13.01.1999**
(21) Application number: 92118897.5
(22) Date of filing: 04.11.1992
(51) Int. Cl.: G06K 7/10, G02B 26/10

(54) **Compact bar code scanning arrangement**
Kompakte Strichkode-Abtastanordnung
Arrangement compact de balayage de codes à barres

(30) Priority: 04.11.1991 US 787458; 15.05.1992 US 884734
(43) Date of publication of application: 12.05.1993
(60) Divisional application: 97202999.5
(73) Proprietor: SYMBOL TECHNOLOGIES, INC., Bohemia New York 11716 (US)
(72) Inventor: Bard, Simon, Stony Brook, New York 11790 (US); Metlitsky, Boris, Stony Brook, New York 11790 (US); Krichever, Mark, Hauppauge, New York 11788 (US); Swartz, Jerome, Old Field, New York 11733 (US); Stratienco, Askold, Patchogue, New York 11772 (US); Katz, Joseph, Stony Brook, New York 11790 (US)
(74) Representative: Maggs, Michael Norman

(56) References cited:
- EP-A- 0 344 882
- EP-A- 0 368 254
- EP-A- 0 373 935
- EP-A- 0 425 844
- EP-A- 0 456 095
- US-A- 4 230 393
- US-A- 4 691 212
- US-A- 4 766 299

## Description

The present invention relates generally to a compact or miniature bar code scanning arrangement, and more particularly pertains to a compact bar code scanning arrangement which is simple, capable of producing several different types of scanning patterns, and does not utilize a relatively bulky motor-driven construction. In a preferred embodiment, the compact or miniature bar code scanner is used in a small housing mounted on an index finger of an operator such that the natural pointing direction of the index finger aims the scanner.

The miniature scanner can be worn on a finger as a ring.

Various optical readers and optical scanning systems have been developed heretofore for reading bar code symbols appearing on a label or on the surface of an article. The bar code symbol itself is a coded pattern of indicia comprised of a series of bars of various widths spaced apart from one another to bound spaces of various widths, with the bars and spaces having different light-reflecting characteristics.

The scanning of bar code patterns has become more complex as bar code patterns have become both more complex and more compact. A typical bar code pattern includes lines and spaces of different widths extending in an x direction, and can be scanned by one or more linear scans in the x direction. Moreover, because the direction of the scan is not always precisely aligned with the direction of the bar code pattern, more complex omnidirectional scanning patterns are sometimes used, wherein consecutive scan lines are angularly displaced relative to one another to form a complex omnidirectional scanning pattern. Two dimensional (2D) bar code patterns (Code 49) have also been introduced wherein, in addition to a typical bar code pattern having lines and spaces of varying widths along an x direction, typical bar code patterns are stacked one upon the other in the y direction to form the 2D bar code pattern. Accordingly, scanning of a 2D bar code pattern is more complex, and requires a raster type of scan wherein consecutive x direction scans are displaced in the y direction by the spacing between stacked rows of the 2D bar code pattern to form a raster scan.

Bar code reading type data input systems improve the efficiency and accuracy of data input for a wide variety of applications. The ease of data input in such systems facilitates more frequent and detailed data input, for example to provide efficient inventories, tracking of work in progress, etc. To achieve these advantages, however, users or employees must be willing to consistently use the bar code readers. The readers therefore must be easy and convenient to operate.

A variety of scanning devices are known. One particularly advantageous type of reader is an optical scanner which scans a beam of light, such as a laser beam, across the symbols. Typically, a light source such as a laser generates a light beam which is optically modified to form a beam spot of a certain size at the working distance and is directed by optical components along a light path toward a bar code symbol located in the vicinity of the working distance for reflection from the symbol. The scanner includes a detector which senses the light reflected from the symbol and provides an analog scan signal representing the encoded information. A photodetector having a field of view extending across and slightly past the symbol detects light of variable intensity reflected off the symbol and generates electrical signals indicative of the detected light. A scanning component is situated in the light path. The scanning component may either sweep the beam spot across the symbol and trace a scan line across and past the symbol, or scan the field of view of the photodetector, or do both.

A digitizer, associated with or included in the scanner, processes the analog signal to produce a pulse signal where the widths and spacings between the pulses correspond to the widths of the bars and the spacings between the bars. The digitizer serves as an edge detector or wave shaper circuit, and the threshold value set by the digitizer determines what points of the analog signal represent bar edges. The pulse signal from the digitizer is applied to a decoder. The decoder first determines the pulse widths and spacings of the signal from the digitizer. The decoder then analyzes the widths and spacings to find and decode a legitimate bar code message. This includes analysis to recognize legitimate characters and sequences, as defined by the appropriate code standard. This may also include an initial recognition of the particular standard the scanned symbol conforms to. This recognition of the standard is typically referred to as autodiscrimination.

Often the particular application for the bar code reader requires that the optical scanner be constructed in the form of a hand-held unit, typically in the form of a pistol. The user points the scanner at the object and operates a trigger to activate the scanning of the bar code. In these hand-held units, a light source, such as a visible laser diode (hereinafter VLD) emits a beam of light. To scan the beam across an image, the beam is reflected from a mirror and the mirror is moved in an oscillatory fashion. The oscillation of the mirror causes the reflected beam to scan back and forth in a desired pattern.

The mirror and means to oscillate the mirror add size and weight to the hand-held scanner. In applications involving protracted use, a large heavy hand-held unit can produce fatigue. Also, a user must pick up and aim the scanner at the object, and this operation may be time consuming, cumbersome and inconvenient. In particular, holding, aiming and activating the scanner ties up one of the user's hands completely so that the user cannot concurrently perform other duties. When use of the scanner produces fatigue or is in some way inconvenient, the user is reluctant to operate the scanner, which defeats the data gathering purposes for which bar code systems are intended.

The components for the light scanning system, including the light source, optics, photodetector, scanning component and an electrical conductor, can be mounted together in a common assembly to constitute a compact, lightweight, scan module. The scan module is mounted in an interchangeable, modular manner in housings of different configurations. For example, the housing can be hand-held and shaped as a cylinder in a so-called flashlight-type configuration, or shaped as a box, or shaped with a gun-like configuration. The housing can be mounted on the back of an operator's arm (see, for example, US-A-4,766,299) or on one or more fingers of the operator's hand, typically with the aid of a strap, a clip, or a glove. The housing can be mounted on a countertop workstation. The housing can be mounted in a mobile cart, or shopping cart, or in some cases, even in a stationary installation.

EP-A-0 341 717 discloses a mirrorless optical scanner.

EP-A-373,935 discloses a bar code reader in which the scanning mechanism is secured to the user's forearm. The mechanism is actuated by a switch on a ring around the user's index finger.

US-A-4,766,299 discloses a hand-mounted bar code reader which is secured to the back of the user's hand by means of a strap. The reader is switched on and off by flexing the muscles in the user's hand.

EP-A-513,530 discloses the most relevant prior art within the sense of Article 54(3) EPC. This document discloses a system for reading optically-encoded information, the system comprising as a first unit
a finger-sized ring arranged to be worn on a finger of a user the finger-sized ring supporting a housing including

   (a) a light-emitter and a beam scanner for producing a scanning light beam to scan the encoded information; and
   (b) an optical detector for detecting light reflected from the encoded information and for producing an electrical signal representative thereof.

According to the present invention there is provided a system for reading optically-encoded information defined by those features set out in claim 1.

The present invention provides an easily operable compact or miniature bar code scanning arrangement. Preferably, the compact or miniature bar code scanner is mounted on an index finger of an operator such that the natural pointing direction of the index finger aims the scanner.

The present invention provides a bar code scanning system in which a first housing is adapted to be worn on a user's finger. The first housing includes a symbol detection means for generating a light beam directed toward a symbol to be read on a target and for receiving reflected light from the symbol to produce an electrical signal corresponding to the intensity of the reflected light, and also a switch for energizing the scanning beam. The housing is mounted on the finger in a position to project a scanning beam forwardly generally in the natural pointing direction of the finger. The electrical signal is transferred from the first housing to a second housing which includes a signal processor for processing the electrical signal to generate therefrom a digitized signal descriptive of the bar code symbol. The second housing is mounted on the user's wrist, and includes therein a decoder for translating the digitized signal into data represented by the bar code symbol.

In an alternative embodiment, the present invention provides a bar code scanning system in which a first housing is adapted to be mounted on a user's finger to project a scanning beam forwardly generally in the natural pointing direction of the finger. The first housing includes a symbol detection means for generating a light beam directed toward a symbol to be read on a target and for receiving reflected light from the symbol to produce an electrical signal corresponding to the intensity of the reflected light, and a switch for energizing the light beam. The first housing also includes therein a signal processor for processing the electrical signal to generate therefrom a digitized signal descriptive of the bar code symbol, which is transferred from the first housing. In greater detail, the digitized signal is transferred from the first housing to a second housing mounted on the user's wrist which includes therein a decoder for translating the digitized signal into data represented by the symbol.

The present invention provides an optical scanning type reader which is comfortable and convenient to operate and leaves the user's hands free during operation of the scanner. The scanner is small and light in weight, and is easy to manipulate to scan encoded data.

One embodiment of the invention eliminates the mirror from the optical scanner and provides a small, lightweight drive for reciprocating one or more elements of the mirror less optical scanner to reduce weight and achieve a higher degree of miniaturization.

In some mounted embodiments, a minimum number of scanner system components are provided in the unit worn on the finger, and the other bulkier components are provided in a separate housing which the user can place at some point which will not encumber the user.

The present invention in one embodiment makes use of a mirrorless optical scanning device having a rotatable shaft with a light emitter mounted thereon and a lever arm attached to the shaft. The lever arm is moved back and forth at a desired scanning frequency for producing an oscillating movement of the light emitter for scanning a beam of light from the emitter back and forth across an image at the desired scanning frequency. A light sensor is also provided for detecting reflections of the emitted light from the scanned image.

The lever arm is moved by a permanent magnet attached to an end of the lever arm a distance from the shaft, and an electromagnet held in a fixed position in proximity to the permanent magnet. When an alternating current signal is applied to the electromagnet, it produces a magnetic field which acts on the permanent magnet to oscillate the lever arm. The electromagnet comprises a bobbin and a coil concentrically wound around the bobbin, and the electromagnet is positioned such that the permanent magnet comes to rest over the center of the coil and bobbin when current applied to the coil is zero. The light emitter is mounted on the shaft such that movement of the lever arm back and forth at the desired scanning frequency produces a corresponding oscillating movement of the light sensor.

The present invention in one embodiment a mirrorless optical scanning device having a light emitter which is moved with an oscillating movement such that a beam of light from the emitter scans back and forth across an image. The oscillating movement of the light emitter is produced by a movable permanent magnet connected to the light emitter, and an electromagnet held in a fixed position in proximity to the permanent magnet. When a cyclical electrical signal is applied to the electromagnet, it produces a magnetic field which acts on the permanent magnet to oscillate the light emitter. A light sensor is also provided for detecting reflections of the emitted light from the scanned image. The electromagnet comprises a bobbin and a coil concentrically wound around the bobbin, and the electromagnet is positioned such that the permanent magnet comes to rest over the center of the coil and bobbin when current applied to the coil is zero.

The present invention in one embodiment makes use of a miniature optical scanning system which includes a base, a photodetector, and an optical emitter mounted on the base for emitting a beam of light, wherein a scanning movement is produced of the beam of light from the optical emitter. A finger sized ring is attached to the base, such that the miniature optical scanning system can be worn on a finger of a user. A pivotable support structure is provided for mounting the optical emitter on the base. A scanning movement of the beam is produced by the pivotable support structure, and the optical emitter is oscillated back and forth thereon, such that light from the optical emitter forms a scanning beam scanned across an image. In greater detail, the pivotable support structure comprises a rotatable shaft, and the optical emitter is mounted on an axis of the shaft, such that light from the optical emitter is emitted in a direction perpendicular to the axis of the shaft. An electrical connector is fixedly mounted on the base, and at least one lead wire runs from the optical emitter to the electrical connector, wherein a point of the lead wire intermediate the optical emitter and the electrical connector is bonded to a point on the pivotable support structure on the axis of the shaft.

In greater detail, the light emitter is oscillated by a lever arm attached to the shaft, and a permanent magnet attached to an end of the lever arm a distance from the shaft. An electromagnet is held in a fixed position in proximity to the permanent magnet, such that when a pulse signal is applied to the electromagnet, it produces a magnetic field which acts on the permanent magnet to oscillate the lever arm.

Moreover, in one embodiment both the optical emitter and the photodetector are oscillated back and forth. In an alternative embodiment, the photodetector is fixedly mounted on the base.

### BRIEF DESCRIPTION OF THE DRAWINGS

In the accompanying drawings like elements are designated by identical reference numerals throughout the several views, and in which:
Figure 1 is a perspective view of a simple and compact linear scanning arrangement which is driven without a traditional bulky motor;
Figure 2 illustrates a universal pattern scanning arrangement which operates partially according to the principle of operation of the scanner of Figure 1, and which is capable of scanning at a relatively high frequency in an x direction, and of either not being driven in y scanning to generate a linear x scanning pattern, or of scanning at two different frequencies in a y direction, a relatively high frequency for omnidirectional scanning patterns, or a relatively low frequency for raster scanning patterns;
Figure 3 illustrates a third arrangement which is somewhat similar in operation to the arrangement of Figure 2, but wherein y and x scanning mechanisms are mounted in a unitary assembly on a common base, and a single scan mirror performs both x and y scanning operations;
Figures 4, 5 and 6 illustrate three related arrangements which are capable of producing virtually any different type of scanning pattern, including linear, omnidirectional such as Lissajous, or raster scanning patterns, and which utilize a single scanning mirror mounted at the free end of an electromagnetically driven central rod, which is capable of oscillating in two orthogonal x and y directions;
Figures 7 and 8 illustrate two related universal scanning arrangements which include a base which mounts in cantilever fashion a low frequency y flexural member which mounts at its free end in cantilever fashion a high frequency flexural member, and wherein an x drive coil is driven with a constant high frequency drive signal to produce x scan deflections, and a second y drive coil uses a drive signal which is one of two fixed frequencies, a low frequency drive signal for raster scanning patterns, or a high frequency drive signal for omnidirectional scanning patterns;
Figure 9 illustrates a universal compact bar code scanning arrangement in which a base includes a low frequency y flexural mounting for a mass which provides a low frequency y scanning motion, and a second flexural member is cantilever mounted on the mass and mounts at its surface a scanning mirror and a permanent magnet which interacts with an adjacent encircling x driving coil to produce high frequency x scanning movements and with an adjacent y driving coil to produce either no, or high or low frequency y scanning movements;
Figure 10 illustrates the mode of operation of the x driving mechanism in the arrangement of Figures 7, 8 and 9, in which a permanent magnet interacts with an adjacent x driving coil;
Figure 11 illustrates the orientation of the permanent magnet of the arrangement of Figure 9 relative to the y driving coil, and illustrates the manner in which the permanent magnet interacts with the y driving coil;
Figure 12 illustrates an arrangement wherein a miniature scanner as disclosed herein for a bar code reader is mounted within a housing supported on an index ring mounting on the index finger of an operator, and the electronics in the bar code reader communicates by a short range radio transmitter with a receiver which might typically be mounted on the belt of the operator;
Figure 13 illustrates an arrangement similar to Figure 12 wherein a miniature scanner as disclosed herein for a bar code reader is mounted within a housing supported on an index ring mounting on the index finger of an operator, and the electronics in the bar code reader communicates by a wire with a portable terminal mounted on a wrist band on the wrist of the operator;
Figures 14 and 15 illustrate respectively a front perspective view and a side elevational view of a further torsional mode miniature scanning element;
Figure 16 is an isometric view of a mirrorless scanner wherein the light emitter reciprocates;
Figure 17 is a diagram showing the rotational arc of the emitter oscillation and the direction in which light is emitted;
Figure 18 is a pictorial illustration of the scanner unit with its housing and attached ring which is connected by a wire to a separate unit housing other components of the scanning system; and
Figure 19 is an isometric view of a mirrorless scanner wherein the light detector also reciprocates.

### DETAILED DESCRIPTION OF THE DRAWINGS

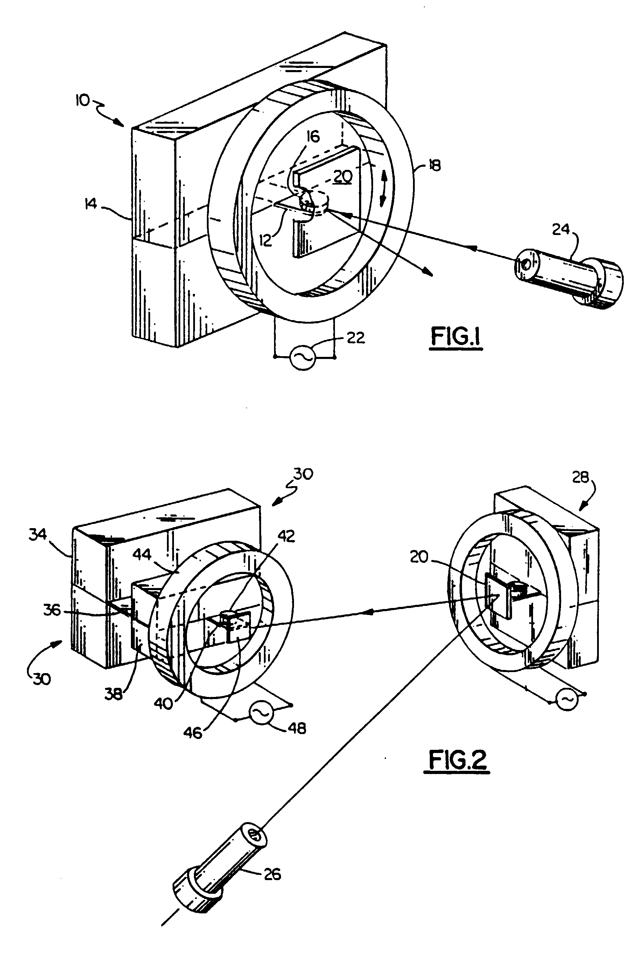

Figure 1 illustrates a simple and compact, high speed, linear bar code scanner which is driven without a traditional bulky motor. Referring to Figure 1, a linear scanning arrangement 10 is provided in which a flexural strip 12 of a suitable flexible material such as Mylar is cantilever mounted to a base 14, as by being secured between two halves of the base 14. The flexural strip 12 supports thereon a miniature permanent magnet 16 positioned inside a coil 18, with an axis passing centrally through the North and South poles of the permanent intersecting the surface of the flexural strip 12 substantially perpendicular thereto. The coil 18 is also secured to the base 14, and a scan mirror 20 is attached to the free end of the cantilever mounted flexural strip 12. By changing the dimensions (length, width and thickness) or the flexural characteristics of the cantilever mounted strip 12, or the mass of the flexural strip 12, the permanent magnet 16 and mirror 20, or the distribution of mass on the flexural strip 12, different resonant frequencies can be established for the vibrating assembly. In general, the natural resonant frequency is determined by the size (length, width and thickness) and flexural strength of the cantilever mounted member, the distribution of mass, and the total mass of the vibrating assembly. Formulas are available and are known in the art to determine the resonant frequency of the vibrating assembly, which can also be tested and developed empirically. When a periodic drive signal 22, such as a sinusoidal signal, is introduced into the coil 18, the periodically reversing magnetic field induced thereby causes the cantilever mounted assembly to oscillate up and down, as shown in Figure 1. This produces a linear scanning motion of the scan mirror 20, which causes a linear scanning of a beam directed onto the mirror by a suitable beam source such as a visible laser diode (VLD) 24. A sinusoidal periodic drive signal causes a periodically reversing magnetic field to be generated by the coil 18, thus creating moments of forces acting upon the North (N) and South (S) poles of the permanent magnet 18, to cause the magnet and the flexible strip 12 on which it is mounted, along with the scan mirror 20 (all of which comprise a cantilever mounted assembly) to vibrate up and down, perpendicular to the flat surface of the flexible strip 12, at a frequency dependent upon the frequency of the periodic drive signal.

In general, and for all of the arrangements disclosed herein, it is desirable to drive a cantilever mounted assembly or a torsional mode mounted assembly with a periodic signal at or near the resonant frequency of the assembly, and to design the assembly with a natural resonant frequency as high as possible to achieve high scan rates of up to several hundred hertz (e.g. 500 Hz). However, lower scan rates are also possible. In general, the chosen scan rate depends upon the particular application, and a 36 scans per second scan rate is typical, which is generated by a periodic signal of 18 Hz.

It is noted that in the description herein, the descriptions of further arrangements often build upon the descriptions of earlier arrangements, and accordingly the descriptions of the details, construction and mode of operation, to the extent they are identical or similar, is generally not repeated for the additional arrangements.

Figure 2 illustrates a universal pattern, compact bar code scanning arrangement which operates partially according to the principle of operation of the scanner of Figure 1, and which is capable of scanning at a relatively high frequency in an x direction, and of not scanning in a y direction for production of a linear x scan, or of scanning at two different resonant frequencies in a y direction, a relatively high frequency or a relatively low frequency. A variety of bar codes and different bar code reading conditions require different types of scan patterns, such as linear scans, raster scan patterns, or omnidirectional scan patterns such as Lissajous type scan patterns. The arrangement of Figure 2 is capable of producing all of these scan patterns with a relatively simple construction, and includes a double resonant construction for producing either a high or low frequency y vertical scan motion.

In the universal scanning arrangement of Figure 2, a light beam from a suitable source such as a Visible Laser Diode (VLD) 26 is directed initially onto a high speed horizontal x deflection arrangement 28 which produces high speed x scanning deflections of the beam. The x deflection arrangement 28 can be and preferably is the same as the linear scanning arrangement 10 in Figure 1. The resultant x scanned beam is then directed to a vertical deflection arrangement 30, which produces either no, or low or high speed vertical scanning deflections of the beam, provided respectively for raster and omnidirectional scan patterns. The y scanning arrangement 30 includes a flexible base provided with two degrees of mechanical freedom to provide two resonant conditions, a low frequency y scan for raster patterns, and a high frequency y scan for omnidirectional patterns. The y scanning arrangement is driven by the electromagnetic forces produced by a coil 44 which encircles a permanent magnet 42 mounted in the y scanning assembly 30 in a manner similar to that as explained with reference to the arrangement of Figure 1.

The y scanning assembly 30 comprises a base 34 which supports a cantilever mounted low frequency flexural strip 36 which supports at its free end a mass 38, which in turn supports a smaller cantilever mounted high frequency flexural strip 40. The flexural strip 40 mounts thereon the permanent magnet 42 positioned within the coil 44, and a scanning mirror 46 mounted at the free end of the flexural strip 40. In this arrangement, the mass 38 and all of the structure mounted thereon (40, 42, 46) can oscillate on the cantilever mounted low frequency flexible strip 36 at a low resonant frequency f_{rL}, and the magnet 42 and scan mirror 46 can oscillate on the smaller cantilever mounted high frequency flexible strip 40 at a high resonant frequency fᵣₕ. The mass 38 is selected to tune the resonant frequency of the low frequency y flexural member to be at or near the low frequency y drive signal for efficient operation. Similar to the first arrangement, for efficient operation the resonant mechanical frequency of the high frequency y flexural member with the y scanning mirror and permanent magnet mounted thereon is designed to be at or near the frequency of the periodically changing high frequency y drive signal. The resonant frequency of each vibrating assembly is determined in general by the spring constant K of the vibrating member and the mass M and distribution of mass of the vibrating assembly. In the two degree of freedom embodiment of Figure 2, each of the two vibrating assemblies has a different spring constant K (K₁ and K₂) and a different mass M (M₁ and M₂) and distribution of mass.

Selection of either the low resonant frequency f_{rL} or the high resonant frequency fᵣₕ is accomplished by changing the frequency of the y periodic drive signal 48 through the y driving coil 44. When there is no driving current through the y driving coil 44, a laser beam from the VLD 26 is incident on the mirror 20 of the scanning assembly 28 which produces a fast (about 300 Hz) x scan line, which is directed onto and reflected by the mirror 46 of the y scanning assembly 30 without any changes in the scan pattern, thereby producing a linear horizontal scan line. When a low frequency signal 48 is connected to the y driving coil 44, it produces a low frequency vertical motion about the low frequency flexible strip 36, thereby producing a raster pattern. When a high frequency signal 48 is connected to the y driving coil 40, it produces a high frequency vertical motion about the high frequency strip 40, thereby producing an omnidirectional scanning pattern. In the second embodiment, the scanning movement in the y direction can be designed to be a desired ratio to the scanning movement in the x direction in accordance with the desired omnidirectional scan pattern.

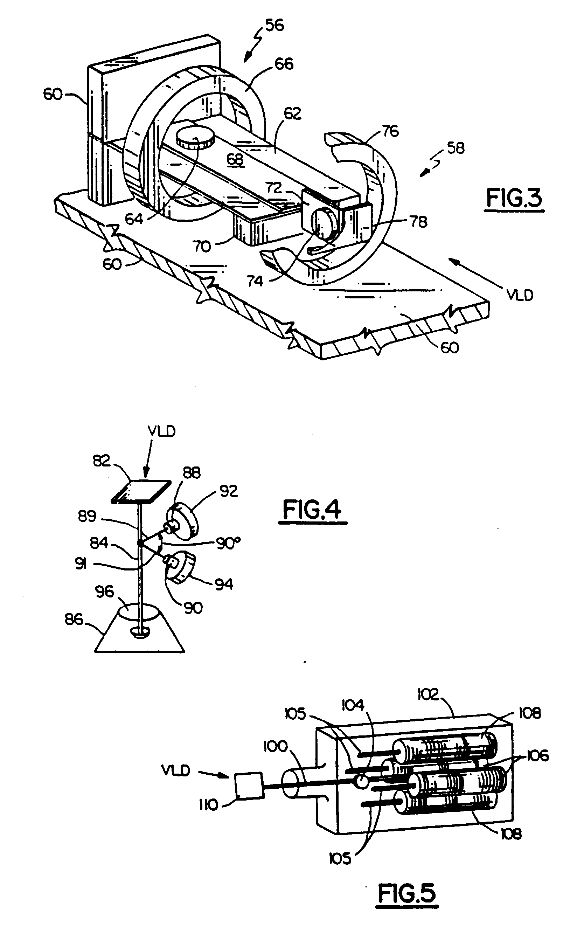

Figure 3 illustrates a third arrangement of the present invention which is somewhat similar in operation to the arrangement of Figure 2, but wherein y and x scanning mechanisms 56, 58 are mounted in a unitary assembly on a common base 60, which in a compact or miniaturized scanner can comprise a PC board. For perspective, in one designed arrangement the length of the base 60 was 1.1 inches, the height was 0.45 inches, and the width was 0.45 inches. The y scanning assembly 56 includes a flexural member 62, cantilever mounted to the base 60, which mounts a permanent magnet 64 positioned inside a y driving coil 66. The flexural member 62 can be fabricated of any suitable material such as Mylar, and includes thereon a damping flexural member 68 which can also be fabricated of any suitable material such as Mylar, which is included to damp higher frequency modes of oscillation of the y scanning assembly. A mass 70 is mounted at the free end of the cantilever flexural member 62 to tune the y scanning assembly to an appropriate low resonant frequency f_{rL}.

The x scanning assembly 58 includes a flexural member 72 cantilever mounted to the mass 70 at the free end of the y flexural member 72, and supports thereon a permanent magnet 74 positioned within an x driving coil 76. A single scan mirror 78 is mounted to the free end of the x flexural member 72, such that it is supported to be driven with high frequency x scanning movements and either no y scanning for a linear x scan or with a low frequency y scanning, to produce a raster type of scanning pattern. Each permanent magnet 64, 74 is encircled by each drive coil 66, 76, and each permanent magnet is mounted on each flexural member with an axis extending substantially centrally through its North and South poles also extending substantially perpendicular to the surface of the flexural member on which the permanent magnet is mounted. The feature of a single scan mirror is particularly advantageous as the small scan mirrors are expensive. The embodiment of Figure 3 can produce a linear scan pattern by actuation of only the x scanning assembly 58, or a raster scan pattern by actuation of both the y and x drive assemblies 56 and 58, but cannot generate an omnidirectional scanning pattern.

Figures 4, 5 and 6 illustrate three related arrangements for a compact bar code scanner which include a flexural member supported at one end in a cantilever fashion by a base, with the flexural member being able to flex in both orthogonally oriented x and y directions. A single scanning mirror is mounted on the flexural member for movement therewith, and a scanning beam is directed thereon. These arrangements are capable of producing virtually any scanning pattern, including linear, omnidirectional such as Lissajous, or raster scan patterns, and which utilize a single scanning mirror.

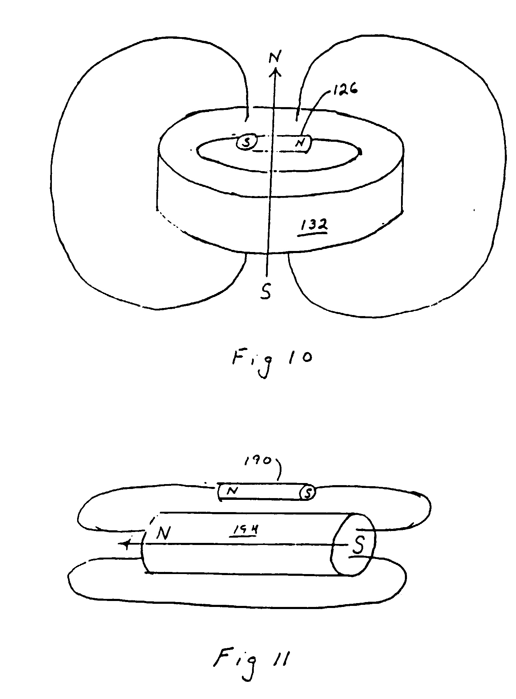

In the arrangement of Figure 4, a scan mirror 82 is mounted at the free end of a flexible shaft 84, the other end of which is flexibly fixed to a base 86 to provide a cantilever type mounting for the flexible shaft, which is capable of vibrating in both x and y directions. Two permanent magnets 88, 90 are mounted as by short mounting supports 89, 91 to the flexible shaft 84 and are mounted perpendicularly at 90° relative to each other. In this arrangement, axes extending centrally through both N and S poles of the permanent magnets 88 and 90 coincide respectively with the central axes of x and y driving coils 92, 94. In this arrangement, each of the coils 92, 94, when driven with a periodic drive signal, generates an alternately reversing magnetic field, as described hereinafter with reference to Figure 10, with the alternately reversing magnetic field alternately attracting and repelling the pole of the permanent magnet positioned closest to the coil. A damping material 96 such as rubber, silicon, etc. is used to mount and hold the shaft 84 in place to the base 86 to create a restoring force and to damp oscillations thereof.

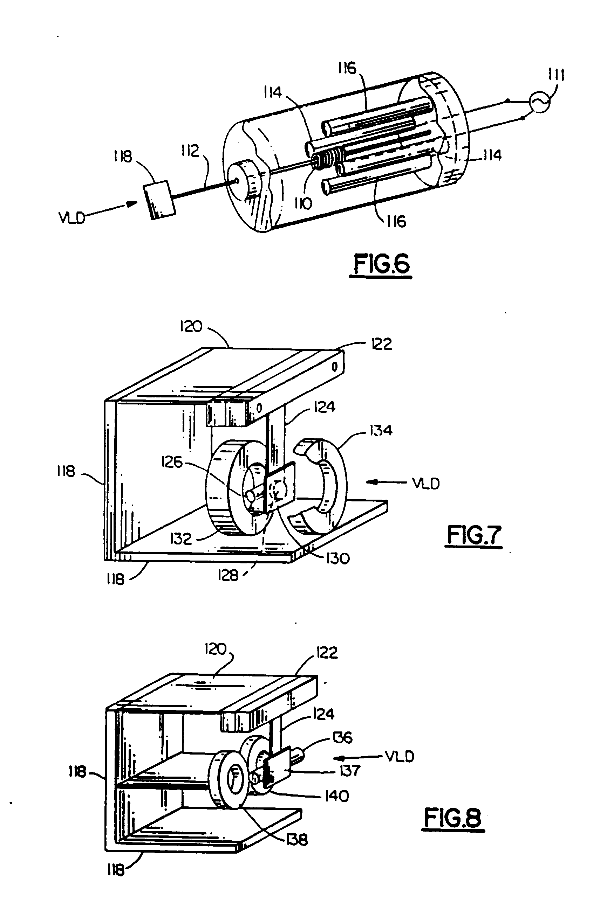

The arrangements of Figures 5 and 6 are similar, and their designs are based upon the designs of driving cartridges currently utilized to cut master records (e.g. 33 or 45 rpm recorded records). These driving cartridges are produced by manufacturers such as Shure Brothers, Inc. In the embodiment of Figure 5, a central shaft 100 is supported in a small cartridge 102, and supports a small magnet 104 which is positioned centrally between projecting magnetic cores 105 of two pairs of x and y driving coils 106, 108, with the pair of x driving coils being oriented orthogonally with respect to the pair of y driving coils. A single scan mirror 110 is supported at the free end of the shaft 100, and is driven in x and y scanning movements by periodic drive signals applied to the x and y driving coils 106, 108.

The arrangement of Figure 6 is functionally symmetrically opposite to the arrangement of Figure 5, and includes a single moving coil 110, having an input 111, which is mounted on a shaft 112 which interacts magnetically with stationary pairs of opposed x and y permanent magnets 114, 116. A single scanning mirror 118 is mounted at the free end of the shaft 112, and is driven in x and y scanning movements by a periodic drive signal applied to the coil 110.

Figures 7 and 8 illustrate two related universal scanning arrangements. The arrangement of Figure 7 includes a base 118 which mounts in cantilever fashion a relatively wide, low frequency y flexural member 120 which mounts at its free end a mass 122. The mass 122 in turn mounts in cantilever fashion a relatively narrow, high frequency flexural member 124, which supports thereon two mutually perpendicular permanent magnets 126, 128 (can also be one T or cross shaped magnet) and a scan mirror 130 which is secured to the inner end (rightmost in Figure 7) of the magnet 128. The permanent magnet 126 is positioned adjacent to an x drive coil 132, and the permanent magnet 128 is positioned adjacent to a y drive coil 134, with the assembly being positioned in the air gap between the two parallel coils 132, 134, which are driven by two periodic drive signals. The x drive coil 132 is driven with a constant high frequency drive signal to produce x scan direction deflections, and the second y drive coil 134 uses a drive signal which is one of two fixed frequencies, a low frequency drive signal for a raster scan pattern, or a high frequency drive signal for Lissajous scanning patterns.

Figure 10 illustrates the mode of operation of the x driving mechanism in the arrangement of Figure 7 in which permanent magnet 126 interacts with the x driving coil 132. When the coil 132 has a periodic drive signal applied thereto, the N and S poles thereof periodically reverse themselves. When the N pole is at the top and the S pole is at the bottom of Figure 10, as illustrated in Figure 10, the permanent magnet 126 and the flexural member 124 to which it is secured are torsionally twisted such that the S end of the permanent magnet is twisted towards the N pole at top, and the N end of the permanent magnet is twisted towards the S pole at the bottom. When the poles of the driving coil are reversed and the S pole is at the top and the N pole is at the bottom of Figure 10, the permanent magnet 126 and the flexural member 124 are twisted in an opposite direction such that the N end of the permanent magnet 126 is twisted towards the S pole at the top, and the S end of the permanent magnet 126 is twisted towards the N pole at the bottom. Accordingly, the permanent magnet 126 and the flexural member 124 to which it is attached, and the scanning mirror 130, are alternately twisted and oscillated in clockwise and counterclockwise x scanning movements.

The y scanning mechanism in the arrangement of Figure 7 operates in a manner similar to the arrangement of Figure 4. The permanent magnet 128 is positioned with an axis extending centrally through the N and S ends of the permanent magnet being positioned colinear with the central axis of the y drive coil 134. One end of the permanent magnet 128 is positioned closest to the drive coil, such that as a periodic drive signal reverses the poles of the coil 134, the end of the magnet 128 closest to coil 134 is periodically attracted to and repelled by the reversing poles of the coil 134, thereby causing either the low frequency flexural strip 120 or the high frequency flexural strip 124 to bend periodically to produce either a high frequency scan with a high frequency drive signal or a low frequency scan with a low frequency drive signal.

For efficiency of operation, the torsional resonant mechanical frequency of the high frequency flexural member 124 with the scanning mirror 130 and permanent magnets 126, 128 mounted thereon is designed to be at or near the frequency of the periodically changing x drive signal. Moreover, the bending resonant mechanical frequency of the high frequency flexural member 124 with the scanning mirror 130 and permanent magnets 126, 128 mounted thereon is designed to be at or near the frequency of the periodically changing high frequency y drive signal. Also, the mass 122 is selected to tune the resonant frequency to the low frequency y drive signal.

In the seventh arrangement, the permanent magnets 126, 128 are positioned in an air gap between the x and y drive coils 132, 134, which are mounted with their central axes substantially colinear.

The arrangement of Figure 8 includes a base 118, a low frequency y drive flexural member 120, mass 122, and a high frequency x drive flexural member 124, similar to the embodiment of Figure 7. The drive arrangement includes a single horizontally positioned permanent magnet 136, with a scan mirror 137 mounted thereon, which is positioned adjacent to and is controlled and driven in scanning movements by two adjacent x and y drive coils 140, 138 which are wound on a soft metal core. The x drive coil 140 is positioned opposite the center of the permanent magnet and controls the horizontal x scanning motion, with the operation thereof being similar to the operation of the embodiment of Figure 7 (x scan). The y drive coil 138 is positioned parallel to and side by side with the first coil opposite to one poled end of the permanent magnet and controls the y vertical scanning motion. As the polarity of the y drive coil is periodically reversed, the poled end of the permanent magnet in front of coil 138 is periodically attracted to and repelled by the alternating polarity of the x drive coil 138 which produces either low frequency y scanning by low frequency flexing of the low frequency flexural member 120, or high frequency y scanning by high frequency flexing of the high frequency flexural member 124.

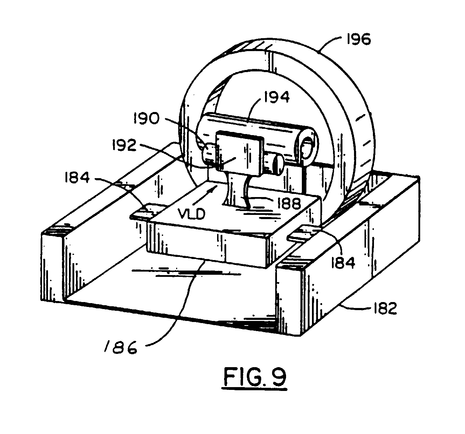

Figure 9 illustrates a preferred arrangement of a compact bar code scanner in which a mass 186 is mounted to a flexural mount 184, with each end thereof extending from an opposite side of the mass 186, which is periodically torsionally flexed back and forth to provide a slow vertical y scanning motion. Preferably, a single flexural member 184 extends between two base mounts 182, with the mass 186 being secured to the single flexural member, as on the top thereof. Moreover, the single flexural member could be a suitable torsional rod attached directly to the base mounts 182, or attached indirectly to the base mounts 182 by suitable torsional springs. A second flexural member 188 is cantilever mounted on the mass 186, and mounts at its surface a permanent magnet 190 and a scanning mirror 192. The permanent magnet 190 interacts with an adjacent y driving coil 194 and an adjacent encircling x driving coil 196, with the magnet 190 interacting with the coils 194 and 196 in a manner as illustrated respectively in Figures 11 and 10.

Figure 11 illustrates the orientation of the permanent magnet 190 relative to the y driving coil 194, and illustrates the manner in which permanent magnet 190 interacts with the y driving coil 194. As a periodic drive signal is applied to drive coil 194, the poles of driving coil 194 periodically change from N to S. When the y drive coil 194 has its N pole at the left end and its S pole at the right end, as illustrated in Figure 11, the magnet 190 is repelled thereby and is displaced away from the coil 194, and when the poles of the coil 194 are reversed, with the S pole at the left end and the N pole at the right end, the magnet 190 is attracted thereby and is displaced towards the coil 194, thus resulting in the magnet 190 being periodically oscillated away and towards the coil y drive 194 to produce a y scanning movement. When a low frequency y drive signal is utilized, the low frequency y drive flexural members 184 support a low frequency y drive oscillation of mirror 192, and when a high frequency y drive signal is utilized, the high frequency flexural member 188 supports a high frequency y drive oscillation.

The high frequency x drive coil 196 produces alternating reversals of the poles of the coil 196, and operates in a manner similar to the arrangement of Figure 7 (x drive). When an N pole is present at the end of coil 196 adjacent to the permanent magnet 190, the S end of the permanent magnet is attracted thereto and the N end of the permanent magnet is repelled thereby, thus producing a periodic clockwise and counterclockwise torsional flexing of the flexural member 188, to produce a high frequency x scanning of the flexural member 188 and the mirror 192 mounted thereon.

In summary, two coils 194, 196, with mutually perpendicular axes, are located adjacent the magnet/mirror assembly, with coil 194 positioned in coil 196, and provide magnetic force which causes the entire assembly to oscillate in three modes, including a high frequency horizontal oscillation mode, either alone, or in a high frequency vertical oscillation mode or in a low frequency vertical oscillation mode.

In the ninth arrangement, the mass 186 tunes the torsional resonant frequency of the low frequency flexural member 184 which extends from opposite sides of the mass to the base, and torsionally flexes during low frequency y scanning operations.

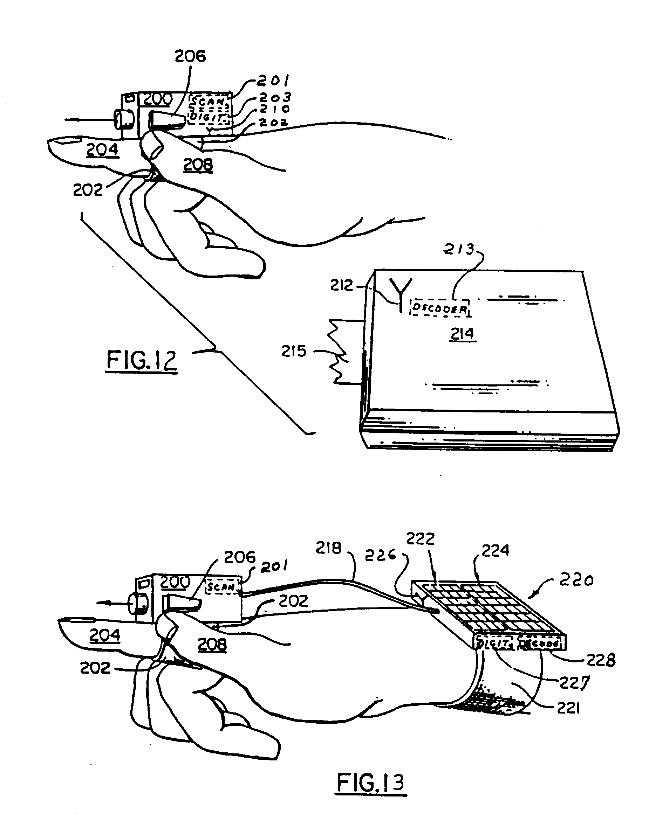

Figure 12 illustrates an arrangement wherein a miniature scanner 201 as disclosed herein for a bar code reader is mounted within a housing 200 supported on an index ring mounting 202 on the index finger 204 of an operator. A trigger switch 206 is provided on the side of the housing 200 which is activated by the operator's thumb 208 to actuate the scanner 201. The electronics in the bar code reader communicates the data it has acquired by a short range radio transmitter 210 in the housing 200 to broadcast to an antenna 212 of a receiver in an associated control unit 214, which might typically be mounted on the belt 215 of the operator. The control unit 214 in the second housing typically would include a display, a keyboard, or a touch screen functioning as a display/keyboard, similar to that illustrated in Figure 13.

A typical prior art bar code reader includes a bar code scanner, a signal digitizer, and a decoder. The bar code scanner generates a light beam directed toward a symbol to be read on a target and receives reflected light from the symbol to produce an analog electrical signal corresponding to the intensity of the reflected light. The signal digitizer includes a signal processor for processing the analog electrical signal to generate therefrom a digitized signal descriptive of the bar code symbol. The decoder decodes or translates the digitized signal into data represented by the symbol.

In the embodiment of Figure 12, the finger mounted housing 200 includes therein the bar code scanner 203 for producing an analog electrical signal and a signal digitizer 203 for generating therefrom a digitized signal descriptive of the bar code symbol. The digitized signal is then transmitted by radio transmission to a decoder 213 located in the control unit 214.

Figure 13 illustrates an arrangement similar to Figure 12 wherein a miniature scanner 201 as disclosed herein for a bar code reader is mounted within a housing 200 supported on an index ring mounting 202 on the index finger 204 of an operator. A trigger switch 206 is provided on the side of the housing 200 which is activated by the operator's thumb 208. The electronics in the bar code reader communicates the analog signal produced by the scanner 201 by a wire 218 with a portable control terminal 220 mounted on a wrist band 221 in a wristwatch like manner on the wrist of the operator. The portable terminal 220 typically includes an LED display 222, an array 224 of entry keys, and an antenna 226 for communicating with a central computer. The analog signal on wire 218 is directed to a signal digitizer 227 located in the control terminal 220 which digitizes the analog signal, and the output digitized signal therefrom is directed to a decoder 228 also located in the control terminal 220. The output of the decoder, which is data represented by the scanned bar code symbol, is then transmitted by 226 to the central computer. Accordingly, the embodiment of Figure 13 also differs from the embodiment of Figure 12 by placing the digitizer 227 in the associated control terminal 220 rather than in the housing 200.

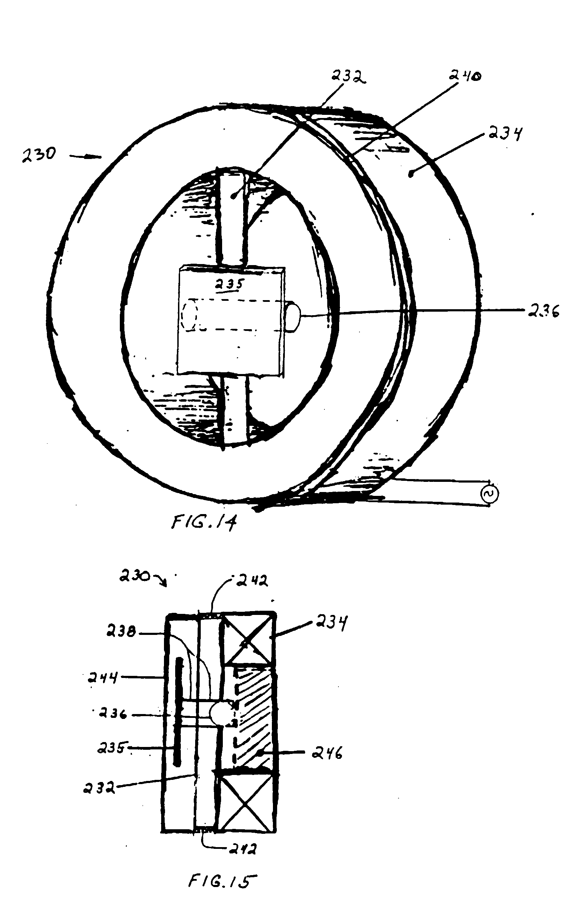

Figures 14 and 15 illustrate respectively a front perspective view and a side elevational view of a further arrangement 230 of a torsional mode, miniature scanning element. The arrangement of Figures 14 and 15 advantageously can be operated from a very low frequency of about 1-2 Hz to a relatively high frequency of approximately 160-180 Hz without any physical changes or mechanical adjustments or tuning. The arrangement of Figures 14 and 15 is mechanically balanced, and the vertical mounting of a torsional flexural support member 232 therein advantageously does not result in any drooping of the torsional flexural support member and the components supported thereby. In this arrangement, a vertically mounted strip 232 of flexible material is attached and mounted at the top and bottom thereof to the front of a small magnetic coil 234. A permanent magnet 236 is mounted horizontally on one side of the flexible strip and a mirror 235 is mounted to the opposite side thereof. The permanent magnet and scanning mirror can be either attached directly to the flexible strip 232 or preferably by some type of holder 238. When an AC current is applied to the coil 234, interaction of the changing magnetic field of the coil 234 and the magnet 236 causes the flexible strip 232 to oscillate horizontally in a torsional mode.

The flexible strip 232 can be fixed to the coil by a holder 240 which might be mounted either directly to the front of the coil 234, as illustrated in Figure 14, or with an intermediate shock absorber material 242, illustrated by a spring-like member in Figure 15, in order to provide mechanical protection in the event of dropping of the scanning assembly 230. The holder 240 might have a transparent shield 244 mounted on the front thereof to provide a sandwich-type of structure for protection of the mirror. In order to enhance performance and save energy, the coil preferably has a core 246 of soft steel or similar material.

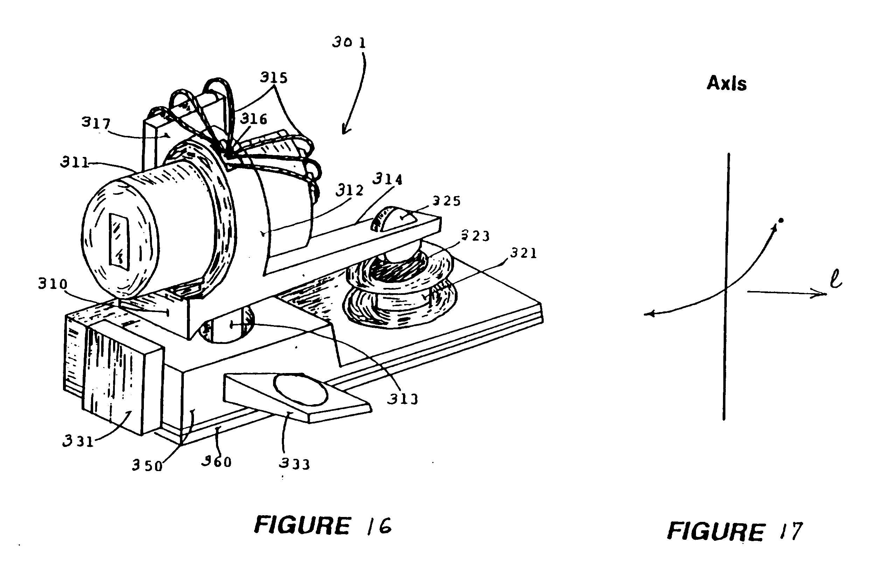

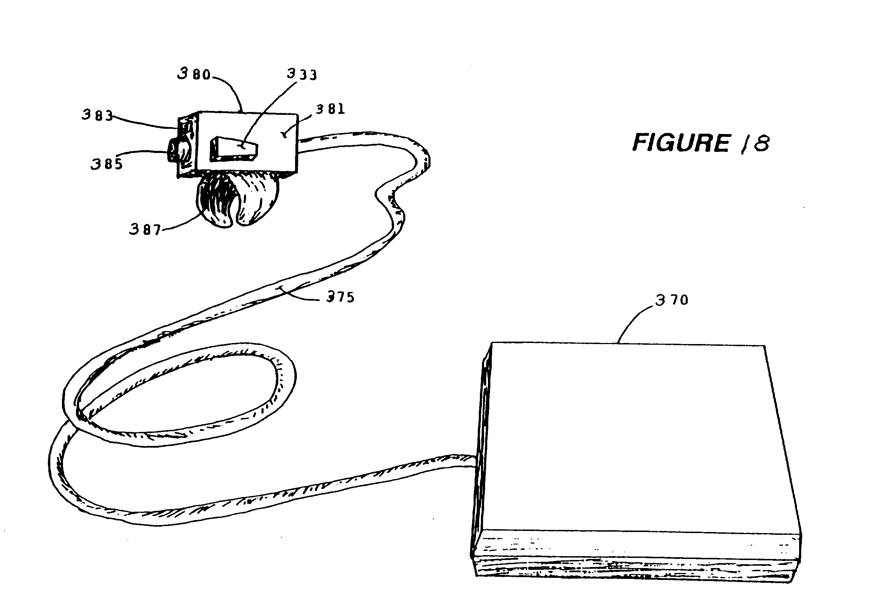

Figure 16 depicts a mirrorless scanning unit 301. A light emitter, such as a visible laser diode or VLD 11, emits a beam of light to generate a scan line. The VLD 311 may be mounted on the pivotable shaft of a motor or on any material means capable of producing oscillating motion.

In the preferred embodiment of scanning unit 301, the VLD 311 is attached to the top end of a rotatable or pivotable shaft 313. The shaft 313 is pivotably mounted in a scanner base 350. The shaft can be installed either on any known type of bearing or just to rotate in the plastic body of base 350. The VLD 311 and shaft 313 together form a moving assembly 310 for scanning the beam of light from the VLD type light emitter. The moving assembly 310 also includes a collar 312 and a lever arm 314 attached to the shaft 313. A force applied to the end of lever arm 314 produces the oscillatory movement of assembly 310, as will be discussed below.

The collar 312 secures the VLD 311 to the moving assembly 310. Preferably the VLD 311 is secured at a point atop of the shaft 313, such that VLD 311 is effectively located on the pivot axis of the shaft 313 and aligned to emit light in a direction perpendicular to the axis of the shaft. Other arrangements of the VLD and shaft are possible. For example, the VLD could be located at a position offset from the axis. Also, the collar could support the VLD at an angle with respect to the shaft.

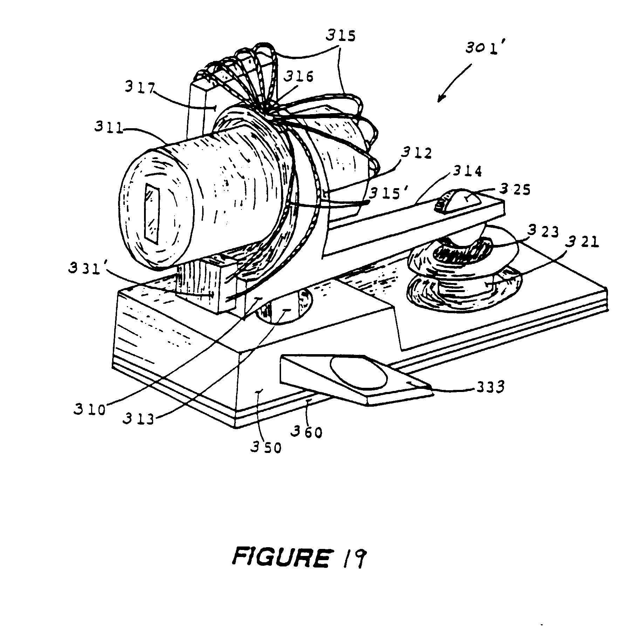

Figure 17 illustrates the relationship of the motion and light emission of the VLD 311 to the axis of the shaft 313. The short rotational arc o about the shaft axis represents the back and forth pivotal oscillation of the VLD 311. The VLD 311 emits light in direction ℓ toward a targeted object, such as a bar code (not shown). As the VLD 311 of assembly 310 oscillates back and forth through the small rotational arc o, the emitted light ℓ will scan back and forth across the targeted image.

As shown in Figure 16, three thin wires 315 connect the leads of the VLD 311 on one side to a stationary holder 317 on the other. Alternatively, one flexible cable could be used. The wires 315 or cable are attached to an intermediate fixing point 316 atop the collar 312. The point 316 is located at the axis of the oscillation of moving assembly 310 and shaft 313 to minimize tension on the lead wires due to the zero linear speed at that point. Alternatively, the wires could be slack and hang loose or be coiled, so long as the wires provide a flexible connection to the oscillating VLD.

A variety of devices can be used to provide the force to oscillate the moving assembly 310 about the axis of shaft 313. In the illustrated arrangement, the oscillation of the assembly is provided by a so-called induced magnetization motor (hereinafter IMM).

In the IMM type motor, a restoring force is provided by the combination of a fixed position core and coil with a movable permanent magnet. If the permanent magnet is mounted on the end of a lever arm attached to rotatable shaft, the force takes the form of a torque about the axis of the shaft.

In the present arrangement of the IMM, a core 321 comprises a bobbin around which the coil 323 is wound such that the core and coil are entirely concentric to minimize size and weight. The permanent magnet 325 is rigidly mounted at the end of the lever arm 314 of the moving assembly 310. Location of the permanent magnet 325 at a distance from the axis of the shaft 313 causes the magnetic force applied to the lever arm 314 through the permanent magnet 325 to produce a torque about the axis of the shaft 313.

The core 321 is made of a soft steel to prevent residual magnetization and is magnetically neutral in this case. When there is no current through the coil 323, axially magnetized permanent magnet 325, which is attached to the moving assembly through the lever arm, positions itself above the central axis of the core 321 by the attraction of the magnet 325 to the steel of the core 321. Thus with no current flowing through coil 323, the moving assembly returns to its rest position at the center of its rotational arc, i.e. facing straight forward.

When a current is introduced through the coil 323, interaction between magnetic fields of the coil and the permanent magnet 325 causes the magnet (with the attached moving assembly) to move from an equilibrium position. As a result of such motion, however, the core becomes increasingly magnetized, thus creating a force (two unlike magnet poles phenomena) which is trying to bring the permanent magnet 325 and the assembly 310 back to the rest position. The magnitude of this force depends on the amount of current through the coil 323, the airgap size between the permanent magnet 325 and a core surface, the size and the material of the core 321, etc. Reversing the polarity of the applied current will reverse the directions of the magnetic forces at work within the IMM. Therefore, if the current applied to the coil takes the form of a cyclical AC signal, such as a sign wave, a pulse signal, a triangular wave, etc., the induced magnetic forces will produce an oscillatory movement of the permanent magnet 325 and the attached moving assembly 310.

Although the IMM is preferred, other arrangements could produce the necessary oscillatory motion. For example, the VLD 311 could be installed on the rotating shaft of a motor. Also, if the IMM is used, other arrangements for mounting the VLD and connecting the moving assembly to the IMM are within the scope of the present invention. For example, in place of the shaft and lever arm arrangement shown in the drawings, the permanent magnet and VLD could both be mounted on a movable or flexible bridge support directly over the bobbin coil so that the permanent magnet and VLD oscillate laterally together in response to the cyclical AC signal applied to the bobbin coil.

When used as a ring mounted scanner for reading optically encoded information, such as a bar code, the scanner also includes a light detector, such as photodiode 331. As shown in Figure 16, the front of the scanner base 350 supports photodiode 331 in a position and orientation whereby light from the VLD 311 reflected by a scanned image impinges on the light sensitive area of photodiode 331. The photodiode 331 receives an amount of light reflected back from the target, e.g. a bar code label, and converts that reflected light into an electrical current. A filter, pre-amplification and amplification stages may be provided on a printed circuit board 360 shown attached to the bottom of the scanner base 350. The pre-amplification and amplification stages convert a current from photodiode 331 into an electrical signal to be sent to digitizer and the rest of a processing circuitry contained in a separate unit 370 (see Figure 18).

A trigger button 333 is mounted on one side of the unit. A user wearing the unit as a ring on one finger, as discussed herein, operates button 333 to activate the unit.

As shown in Figure 18, a hand unit 380 contains the mirrorless scanner within a housing 381. The housing 381 provides a rigid support for the base 350 of scanner 301. The housing 381 includes a rectangular aperture 383 allowing the light beam emitted from the oscillating VLD 311 to pass through to impinge on and scan the target. Reflected light passes through an ambient light blocking optical filter 385 mounted on the front of the housing 381 below aperture 383 and impinges on the photodiode 331. A lens may be included with filter 385 to focus light on the photodiode 331. Although not essential, such a lens does extend the working range of the scanner. The trigger 333 extends through one side of the housing 381. A ring 387 is attached to the bottom of the housing 381 and thereby to base 350 of scanner 301.

The illustrated embodiment is set up for use on a person's right hand. For example, a user puts the ring 387 over the index finger of his or her right hand. To operate the scanner, the user then points the index finger and the hand unit 380 of the scanner at the target and activates switch 333, using the thumb of the right hand. To adapt the hand unit 380 for wearing on the left hand requires only placement of the switch 333 on the opposite side.

A long (3-4 feet) (91-122 cm) flexible multi-wire cable 375 connects the hand unit 380 with the rest of the processing circuitry, consisting of the further amplification stages, digitizer, AC signal generator to drive the IMM, etc. mounted inside a small separate container 370. The separate container 370 also houses the circuitry needed to power the VLD 11 and to provide the AC drive signal for the IMM. In one embodiment, the additional electronics consisted of processing circuitry provided by a circuit board for a standard LS-2000 scanner manufactured by Symbol Technologies, Inc. The container 370 is small enough (2.75" x 4" x 1.25") (7,0 x 10,2 x 3,8 cm) to be carried in the pocket, on the belt, etc.

The box 370 can further accommodate a complete decoder with the battery power supply (LS85000 type by Symbol Technologies, Inc.) or even a keyboard (like "JADE") to make a system not only "hands-free" but "location free" as well. Some extra devices can be incorporated in the box 370, for example a memory unit (units), RF (radio frequency) transmitter or the like. This makes the entire device portable and "motion free," such that during scanning the ring mounted scanner unit need not be connected by any physical means to the cash register, computer, etc. which will ultimately process the scanned bar code data.

In an embodiment actually built, the mirrorless scanning unit was only 1" (2,54 cm) long, by 1.25" (3,18 cm) high, by 0.625" (1,59 cm) wide. The exterior dimensions of the housing 381 containing the mirrorless are 1.1" (2,79 cm) long, by 1.4" (3,56 cm) high, by 0.7" (1,78 cm) wide. It takes only 13.5 mA and 3.5V to operate the mirrorless scanner. Scan angle is ± 20°. Unit weight is less than one ounce (27.5 grams). Such a hand unit 380 can easily be worn on a finger like an ordinary ring, leaving the operator's hands (including that finger) absolutely free.

The working range or decode zone can be changed by refocusing the VLD (for the beginning of the working range) and by the installation of a Fresnel lens in front of photodiode or by using a photodiode with a larger sensitivity and active area.

Figure 19 shows a further mirrorless scanner. The scanner 301' of Figure 19 is generally similar to the scanner 301 shown in Figure 16, and like reference numerals indicate corresponding elements of the scanner in each drawing. As shown in Figure 19, two thin wires 315' connect the leads of the photodiode 331' to the stationary holder 317'. The wires 315' are attached to the intermediate fixing point 316 atop the collar 312 in the same manner as the wires 315 from VLD 311.

In Figure 19, the photodiode 331' oscillates with the VLD 311. The photodiode 331' is located on the front of the moving assembly 310 directly below the VLD 311. The photodiode 331', like VLD 311, oscillates back and forth through a short rotational are about the axis of shaft 313. The receptor photodiode 331' therefore closely tracks the motion of the oscillating emitter, VLD 311.

Clearly, the present invention provides a particularly small, lightweight optical scanner. Mounted on a ring 387 and connected to processing circuitry in a separate unit 370, the scanner can be worn and operated on a user's finger. Aiming the scanner hand unit 380 then requires only pointing the finger at the object bearing the encoded information and activating the switch 333 with the thumb of the same hand. This provides convenient, comfortable operation and leaves the user's hands free for other activities.

## Claims

1. A system for reading optically-encoded information, the system comprising as a first unit
a finger-sized ring (202; 387) arranged to be worn on a finger (204) of a user and a housing supported by said ring; the housing (200; 381) including
(a) a light-emitter and a beam scanner for producing a scanning light beam to scan the encoded information;
(b) an optical detector (331) for detecting light reflected from the encoded information and for producing an electrical signal representative thereof; and
(c) a trigger switch actuatable by the user's thumb (206; 333) for activating the unit.

2. A system as claimed in claim 1 adapted to read information encoded as a bar-code symbol.

3. A system as claimed in claim 1 or claim 2 in which the beam scanner comprises a mirrorless scanner arrangement.

4. A system as claimed in any one of the preceding claims including a second unit (214; 220; 370) containing circuitry for analyzing and/or processing the said electrical signals.

5. A system as claimed in claim 4 in which the first unit is coupled to the second unit (220; 370) by an electrical conductor.

6. A system as claimed in claim 5 in which the electrical conductor is a flexible cable (218; 375).

7. A system as claimed in claim 4 in which the first unit is coupled to the second unit (214) by radio transmission.

8. A system as claimed in claim 4 in which the second unit (220) is secured to the user's wrist by a wrist band (221).

9. A system as claimed in claim 4 in which the second unit (214) is secured to the user's belt (215).

10. A system as claimed in claim 4 in which the second unit (214; 220; 370) includes a decoder (213; 228) for decoding said electrical signals into data representative of the said information.

11. A system as claimed in any one of the preceding claims wherein the housing (200, 381) includes a base (350) for mounting the light-emitter and the beam scanner.

12. A system as claimed in claim 11 further including:
(a) a pivotable support structure pivotally mounting the light emitter (311) on the base (350); and
(b) means for oscillating the light emitter (311) back and forth on the pivotable support structure such that light from the light emitter forms a scanning beam.

13. A system as claimed in claim 12 in which the pivotable support structure comprises a rotatable shaft (313), the light emitter (311) being mounted on an axis of the shaft such that light from the light emitter (311) is emitted in a direction perpendicular to the axis of the shaft (313).

14. A system as claimed in claim 13 further including an electrical connector fixedly mounted on the base and a lead wire (315) running from the light emitter to the electrical connector, wherein a point of the lead wire intermediate the light emitter and the electrical connector is bonded to a point (316) on the pivotable support structure on the axis of the shaft.

15. A system as claimed in any one of claims 13 or 14 in which the means for oscillating the light emitter comprises:
(a) a lever arm attached to the shaft;
(b) a permanent magnet attached to an end of the lever arm a distance from the shaft; and
(c) an electromagnet held in a fixed position in proximity to the permanent magnet, such that when a pulse signal is applied to the electromagnet it produces a magnetic field which acts on the permanent magnet to oscillate the lever arm.

16. A system as claimed in any one of the preceding claims including means for oscillating the optical detector (331) back and forth.

## Patentansprüche

1. System zum Lesen von optisch codierter Information, wobei das System als eine erste Einheit einen auf einem Finger (204) eines Verwenders zu tragenden Fingerring (202; 387) und ein von dem Ring getragenes Gehäuse aufweist; wobei das Gehäuse (200; 381) folgendes umfaßt:
(a) einen Licht-Emitter und Strahl-Scanner zum Erzeugen eines Scan- bzw. Abtast-Lichtstrahls, um die codierte Information zu scannen bzw. abzutasten;
(b) einen optischen Detektor (331) zum Detektieren von Licht, das von der codierten Information reflektiert wird, und zum Erzeugen eines dafür repräsentativen elektrischen Signals; und
(c) einen durch den Daumen (206; 333) des Verwenders betätigbaren Auslöse-Schalter zum Aktivieren der Einheit.

2. System gemäß Anspruch 1, wobei das System geeignet ist zum Lesen von Information, die als ein Strichcode-Symbol codiert ist.

3. System gemäß Anspruch 1 oder 2, wobei der Strahl-Scanner eine Scanner-Anordnung ohne Spiegel aufweist.

4. System gemäß einem der vorhergehenden Ansprüche, wobei das System eine zweite Einheit (214; 220; 370) umfaßt, die eine Schaltung zum Analysieren und/oder Verarbeiten der elektrischen Signale enthält.

5. System gemäß Anspruch 4, wobei die erste Einheit durch einen elektrischen Leiter mit der zweiten Einheit (220; 370) gekoppelt ist.

6. System gemäß Anspruch 5, wobei der elektrische Leiter ein flexibles Kabel (218; 375) ist.

7. System gemäß Anspruch 4, wobei die erste Einheit durch Funk- bzw. Radio-Übertragung mit der zweiten Einheit (214) gekoppelt ist.

8. System gemäß Anspruch 4, wobei die zweite Einheit (220) durch ein Armband (221) an dem Handgelenk des Verwenders befestigt ist.

9. System gemäß Anspruch 4, wobei die zweite Einheit (220) an dem Gürtel (215) des Verwenders befestigt ist.

10. System gemäß Anspruch 4, wobei die zweite Einheit (214; 220; 370) einen Decoder (213; 228) umfaßt zum Decodieren der elektrischen Signale in Daten, die repräsentativ sind für die Information.

11. System gemäß einem der vorhergehenden Ansprüche, wobei das Gehäuse (200; 381) eine Basis (350) umfaßt zum Anbringen des Licht-Emitters und des Strahl-Scanners.

12. System gemäß Anspruch 11, wobei das System ferner folgendes aufweist:
(a) eine schwenkbare Tragstruktur, die den Licht-Emitter (311) auf der Basis schwenkbar anbringt; und
(b) Mittel zum Oszillieren bzw. Hin- und Herschwingen des Licht-Emitters (311) auf der schwenkbaren Tragstruktur, so daß Licht von dem Licht-Emitter einen überstreichenden bzw. scannenden Strahl bildet.

13. System gemäß Anspruch 12, wobei die schwenkbare Tragstruktur eine drehbare Welle (313) aufweist, wobei der Licht-Emitter (311) auf einer Achse der Welle angebracht ist, so daß Licht von dem Licht-Emitter (311) in einer Richtung senkrecht zu der Achse der Welle (313) ausgesandt bzw. emittiert wird.

14. System gemäß Anspruch 13, wobei das System ferner einen fest auf der Basis angebrachten, elektrischen Verbinder und einen von dem Licht-Emitter zu dem elektrischen Verbinder verlaufenden Leitungsdraht (315) umfaßt, wobei der Leitungsdraht an einer Stelle zwischen dem Licht-Emitter und dem elektrischen Verbinder mit einer Stelle (316) auf der schwenkbaren Tragstruktur auf der Achse der Welle verbunden ist.

15. System gemäß einem der Ansprüche 13 oder 14, wobei die Mittel zum Oszillieren bzw. Schwingen des Licht-Emitters folgendes aufweisen:
(a) einen an der Welle befestigten Hebelarm;
(b) einen Permanentmagneten, der in einer Entfernung von der Welle an einem Ende des Hebelarms angebracht ist;
(c) einen Elektromagneten, die in nächster Nähe zu dem Permanentmagneten in einer festen Position gehalten wird, so daß ein an den Elektromagneten angelegtes Impulssignal ein Magnetfeld erzeugt, das auf den Permanentmagneten wirkt, um den Hebelarm zu oszillieren bzw. hin- und herzuschwingen.

16. System gemäß einem der vorhergehenden Ansprüche, wobei das System Mittel zum Oszillieren bzw. Hin- und Herschwingen des optischen Detektors (331) umfaßt.

## Revendications

1. Système destiné à lire des informations codées optiquement, ce système comprenant, comme première unité, un anneau faisant un tour de doigt (202 ; 387) disposé pour être porté par le doigt (204) d'un utilisateur et un logement soutenu par ledit anneau, ce logement (200, 381) comprenant :
(a) un émetteur de lumière et un scanner à faisceau destinés à produire un faisceau lumineux de scannage pour scanner les informations codées ;
(b) un détecteur optique (331) pour détecter la lumière réfléchie par les informations codées et produire un signal électrique représentatif de ces informations ; et
(c) un interrupteur à gâchette pouvant être déclenché par le pouce de l'utilisateur (206 ; 333) pour activer l'unité.

2. Système selon la revendication 1, conçu pour lire des informations codées sous forme d'un symbole de code barres.

3. Système selon la revendication 1 ou la revendication 2 dans lequel le scanner à faisceau comprend un dispositif de scannage sans miroir.

4. Système selon l'une quelconque des revendications précédentes comprenant une seconde unité (214 ; 220 ; 370) contenant des circuits destinés à analyser et/ou traiter lesdits signaux électriques.

5. Système selon la revendication 4, dans lequel la première unité est connectée à la seconde unité (220 ; 370) par un conducteur électrique.

6. Système selon la revendication 5, dans lequel le conducteur électrique est un câble souple (218 ; 375).

7. Système selon la revendication 4, dans lequel la première unité est connectée à la seconde unité (214) par une liaison radio.

8. Système selon la revendication 4, dans lequel la seconde unité (220) est fixée sur le poignet de l'utilisateur par un bracelet (221).

9. Système selon la revendication 4, dans lequel la seconde unité (214) est fixée sur la ceinture de l'utilisateur (215) ;

10. Système selon la revendication 4, dans lequel la seconde unité (214 ; 220 ; 370) inclut un décodeur (213 ; 228) pour décoder lesdits signaux électriques et les convertir en données représentatives desdites informations.

11. Système selon l'une quelconque des revendications précédentes, dans lequel le logement (200, 381) inclut un socle (350) pour supporter l'émetteur de lumière et le scanner à faisceau.

12. Système selon la revendication 11 comprenant, en outre, :
(a) une structure de soutien pivotante supportant de façon à ce qu'il puisse pivoter l'émetteur de lumière (311) monté sur le socle (350) ; et
(b) un moyen permettant de faire osciller l'émetteur de lumière (311) alternativement sur la structure de soutien pivotante pour que la lumière provenant de l'émetteur de lumière forme un faisceau de scannage.

13. Système selon la revendication 12, dans lequel la structure de soutien pivotante comprend un arbre rotatif (313), l'émetteur de lumière (311) étant monté selon un axe de l'arbre de telle sorte que la lumière émise par l'émetteur de lumière (311) soit émise dans une direction perpendiculaire à l'axe de l'arbre (313).

14. Système selon la revendication 13 comprenant, en outre, un connecteur électrique monté à demeure sur le socle et un fil de sortie (315) reliant l'émetteur de lumière au connecteur électrique, dans lequel un point du fil de sortie intermédiaire entre l'émetteur de lumière et le connecteur électrique est relié à un point (316) de la structure de soutien pivotante sur l'axe de l'arbre.

15. Système selon l'une quelconque des revendications 13 ou 14 dans lequel le moyen d'oscillation de l'émetteur de lumière comprend :
(a) un levier fixé à l'arbre ;
(b) un aimant permanent fixé à une extrémité du levier à une certaine distance de l'arbre ; et
(c) un électro-aimant maintenu dans une position fixe à proximité de l'aimant permanent de telle sorte que lorsqu'un signal impulsionnel est appliqué à l'électro-aimant, cela crée un champ magnétique agissant sur l'aimant permanent pour faire osciller le levier.

16. Système selon l'une quelconque des revendications précédentes comprenant un moyen pour faire osciller alternativement le détecteur optique (311).
